Europäisches Patentamt

European Patent Office

Office européen des brevets

(19)

(11) Veröffentlichungsnummer: **0 008 315**
**B1**

(12) # EUROPÄISCHE PATENTSCHRIFT

(45) Veröffentlichungstag der Patentschrift:
22.07.81

(51) Int. Cl.³: **B 60 N 3/02**

(21) Anmeldenummer: **79100126.6**

(22) Anmeldetag: **17.01.79**

(54) **Haltegriff für Fahrzeuge.**

(30) Priorität: **05.08.78 DE 7823546 U**

(43) Veröffentlichungstag der Anmeldung:
**05.03.80 Patentblatt 80/5**

(45) Bekanntmachung des Hinweises auf die Patenterteilung:
**22.07.81 Patentblatt 81/29**

(84) Benannte Vertragsstaaten:
**DE FR GB IT SE**

(56) Entgegenhaltungen:
**DE-U-1 899 309**
**DE-U-1 908 511**

(73) Patentinhaber: **Gebr. Happich GmbH,**
**Postfach 10 02 49 Clausenbrücke 1,**
**D-5600 Wuppertal 1 (DE)**

(72) Erfinder: **Flagmeyer, Friedhelm, Am Engelnberg 21,**
**D-5600 Wuppertal 1 (DE)**
Erfinder: **Dietz, Günter, Eggenbruch 97,**
**D-5600 Wuppertal 1 (DE)**

EP 0 008 315 B1

## Haltegriff für Fahrzeuge

Die Erfindung bezieht sich auf einen Haltegriff für Fahrzeuge, bestehend aus einem Griffkörper, der mit einem aus der Griffkörperebene hervorspringenden Kleiderhaken und beidendig mit Lageransätzen zur Befestigung an einer Fahrzeugkarosserie ausgebildet ist, und der im wesentlichen aus Kunststoff mit einer darin eingelagerten zugfesten Einlage gebildet ist.

Es sind Haltegriffe für Fahrzeuge mit daran angeformten Kleiderhaken (vgl. DE-U-1 950 527) bekannt, wobei jedoch die Kleiderhaken mangels einer eingelagerten Einlage relativ weich sind und daher auch nur gering belastet werden können. Ferner sind Haltegriffe für Fahrzeuge hergestellt worden, deren angeformte Kleiderhaken durch eine Einlage ausgesteift sind. Bei diesen bekannten Haltegriffen sind die Einlagen jeweils zweiteilig ausgebildet und die Einzelteile in recht aufwendiger Weise aneinander festgelegt. Die Festlegung erfolgt durch Punktschweißen oder durch Umbiegen von Klammertaschen. Für diese Befestigungsarten ist jeweils der Einsatz von Hilfsvorrichtungen erforderlich, was die Fertigung verteuert.

Es ist Aufgabe der Erfindung, einen Haltegriff der eingangs genannten Art in bezug auf die Einlage zu verbessern, insbesondere die Einlage so auszubilden, daß eine aufwendige Montage entfallen kann.

Zur Lösung dieser Aufgabe ist erfindungsgemäß vorgesehen, daß die Einlage aus zwei zusammengesteckten Einzelteilen besteht, die ineinandergreifende Rastelemente aufweisen und starr miteinander verbunden sind, wobei ein Teil der Einlage in dem Kleiderhaken eingebettet ist.

Durch die erfindungsgemäße Maßnahme werden die Einzelteile der Einlage durch bloßes Zusammenstecken und selbsttätige Verrastung miteinander verbunden, und zwar schnell und einfach und insbesondere ohne Hilfsvorrichtung, und die Einlage kann hiernach in üblicher Weise mit relativ weich eingestelltem Kunststoffmaterial, z. B. PVC, umspritzt werden.

Das erste Teil der Einlage kann erfindungsgemäß bandförmig ausgebildet sein und sich über die gesamte Länge des Haltegriffes erstrecken, wobei das zweite Teil der Einlage quer an dem ersten Teil reiterartig angeordnet ist und mit angeformten Zungen dessen Breitflächen übergreift. Dabei ist es zweckmäßig, daß das erste Teil der Einlage zumindest eine Lochung und wenigstens eine Zunge des zweiten Teils der Einlage einen in die Lochung einrastenden Sperrnocken aufweist. Die Wurzeln der Zungen stützen sich an einer Randkante des ersten Teils der Einlage ab und bewirken mit dem Sperrnocken eine zuverlässige Arretierung bzw. Festlegung der Einlagenteile aneinander.

Die Einlage kann insgesamt aus Metall, wie z. B. Stahlblech bestehen. Es ist aber auch möglich, die Einlage aus einer Metall-Kunststoff-Kombination zu bilden, wobei dann zweckmäßigerweise das erste Teil der Einlage als Stahlband und das zweite Teil der Einlage als Kunststoffspritzgußteil ausgebildet ist.

Ein Ausführungsbeispiel eines erfindungsgemäßen Haltegriffes wird nachfolgend anhand der Zeichnung näher erläutert. Es zeigt

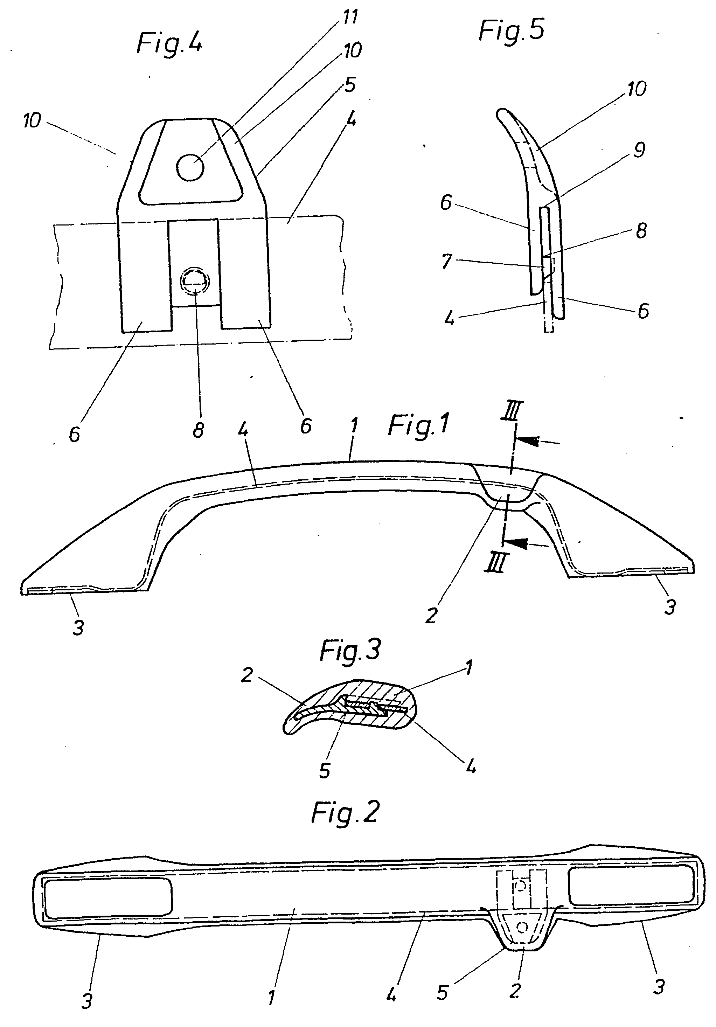

Fig. 1 den Haltegriff in Ansicht,
Fig. 2 eine Draufsicht nach Fig. 1,
Fig. 3 einen Schnitt gemäß der Linie III-III in Fig. 1,
Fig. 4 eine Ansicht auf einen Teilbereich der Einlage und
Fig. 5 eine Seitenansicht von Fig. 4.

Der Haltegriff besitzt eine etwa U-förmige Gestaltung und besteht aus einem Griffkörper 1 mit einem daran angeformten Kleiderhaken 2 und mit an den Enden angeordneten Lageransätzen 3, die an der Fahrzeugkarosserie zur Anlage kommen und zur Befestigung des Haltegriffes dienen. Der Haltegriff besteht im wesentlichen aus einem Polstereigenschaften aufweisenden Kunststoffmaterial und weist eine eingelagerte Einlage aus zugfestem Material auf, die aus Stahlblech oder aus zähelastischem und relativ hart eingestelltem Kunststoff oder auch aus einer Kombination dieser Werkstoffe bestehen kann.

Die Einlage besitzt einen zweiteiligen Aufbau. Dabei ist das erste Teil 4 der Einlage bandförmig ausgebildet, erstreckt sich praktisch über die gesamte Länge des Haltegriffes und besteht vorzugsweise aus einem Stahlband. Das zweite Teil 5 der Einlage, welches im Bereich des Kleiderhakens 2 mit dem ersten Teil 4 verbunden ist, ist reiterförmig ausgebildet und ist mit angeformten Zungen 6 auf das erste Teil 4 der Einlage aufgesteckt. Eine der Zungen 6 besitzt einen angeformten warzenförmig ausgebildeten Rastnocken 7, der in eine Lochung 8 des ersten Teils 4 der Einlage einrastet. Die Wurzel 9 der Zungen 6 stützt sich gegen eine Randkante des Teils 4 der Einlage ab, so daß eine zuverlässige Arretierung gewährleistet ist. Das Teil 5 der Einlage ist vorzugsweise als Kunststoffspritzgußteil ausgebildet, weist Versteifungsrippen 10 und einen Durchbruch 11 auf, welcher zur guten Verankerung des Umhüllungsmaterials dient.

## Patentansprüche

1. Haltegriff für Fahrzeuge, bestehend aus einem Griffkörper (1), der mit einem aus der Griffkörperebene hervorspringenden Kleiderhaken (2) und beidendig mit Lageransätzen (3) zur Befestigung an einer Fahrzeugkarosserie ausgebildet ist, und der im wesentlichen aus Kunststoff mit einer darin eingelagerten zugfesten Einlage gebildet ist, dadurch gekennzeichnet, daß die Einlage aus zwei zusammengesteckten Einzelteilen (4 und 5) besteht, die ineinandergreifende Rastelemente aufweisen und starr miteinander verbunden sind, wobei ein Teil (5) der Einlage in dem Kleiderhaken (2) eingebettet ist.

2. Haltegriff nach Patentanspruch 1, dadurch gekennzeichnet, daß das erste Teil (4) der Einlage bandförmig ausgebildet ist und sich über die gesamte Länge des Haltegriffes erstreckt, und daß das zweite Teil (5) der Einlage quer an dem ersten Teil (4) reiterartig angeordnet ist und mit angeformten Zungen (6) dessen Breitflächen übergreift.

3. Haltegriff nach Patentanspruch 2, dadurch gekennzeichnet, daß das erste Teil (4) der Einlage zumindest eine Lochung (8) und wenigstens eine Zunge (6) des zweiten Teils (5) der Einlage einen in die Lochung (8) einrastenden Sperrnocken (7) aufweist.

4. Haltegriff nach einem oder mehreren der Patentansprüche 1 bis 3, dadurch gekennzeichnet, daß die Einlage aus Metall besteht.

5. Haltegriff nach einem oder mehreren der Patentansprüche 1 bis 3, dadurch gekennzeichnet, daß die Einlage aus einer Metall-Kunststoff-Kombination besteht, wobei das erste Teil (4) der Einlage als Stahlband und das zweite Teil (5) der Einlage als Kunststoffspritzgußteil ausgebildet ist.

**Claims**

1. A hand grip for a vehicle, the grip comprising a grip handle (1) which is provided with a clothes-hook (2) and at each of its ends with a bearing extension (3) for fastening it to the vehicle body, and which is formed substandially of a synthetic plastics material having a stretch-proof insert encased therein, characterized in that the insert comprises two discrete yet assembled components (4 and 5) having interengaging stop elements and being rigidly joined to one another, and in that one (5) of the insert's components is embedded in the clothes-hook (2).

2. A hand grip according to claim 1, characterizes in that the first component (4) of the insert is strip-shaped and extends along the entire length of the hand grip, and in that the second component (5) of the insert is mounted transversely and straddlingly on the first component (4) the two wide faces of which it overlaps by means of integrally formed tongues (6).

3. A hand grip according to claim 2, characterized in that the first component (4) of the insert is provided with at least one perforation (8), and in that at least one tongue (6) of the insert's second component (5) is provided with a stop latch (7) engaging the perforation (8).

4. A hand grip according to one or more of the claims 1 to 3, characterized in that the insert consists of metal.

5. A hand grip according to one or more of the claims 1 to 3, characterized in that the insert is a combination of a metal and a synthetic plastics material, in which combination the first component (4) of the insert is steel strip and the second component (5) of the insert is injection moulded from a synthetic plastics material.

**Revendications**

1. Poignée de maintien pour véhicules automobiles, comprenant une poignée (1) comportant un crochet à vêtement (2) faisant saillie par rapport au plan du corps de la poignée et à ses deux extrémités des embases (3) destinées à sa fixation sur la carrosserie d'un véhicule automobile, et constituée essentiellement en matière synthétique dans laquelle est noyée une garniture interne résistant à la traction, caractérisée en ce que la garniture interne est constituée par deux éléments individuels (4, 5) s'emboîtant l'un dans l'autre, comprenant des organes d'encliquetage s'enclenchant l'un dans l'autre et reliés rigidement l'un à l'autre, un élément (5) de la garniture interne étant noyé dans le crochet à vêtement (2).

2. Poignée selon la revendication 1, caractérisée en ce que le premier élément (4) de la garniture interne est constitué sous forme d'une bande et s'étend sur toute la longueur de la poignée, et en ce que le second élément (5) de la garniture interne est disposé transversalement à cheval sur le premier élément (4) et entoure ses surfaces en largeur au moyen de languettes (6).

3. Poignée selon la revendication 2, caractérisée en ce que le premier élément (4) de la garniture interne comprend au moins une perforation (8) et au moins une languette (6) du second élément (5) de la garniture interne comprend une saillie de blocage (7) venant s'encliqueter dans la perforation (8).

4. Poignée selon l'une ou plusieurs des revendications 1 à 3, caractérisée en ce que la garniture interne est réalisée en métal.

5. Poignée selon l'une ou plusieurs des revendications 1 à 3, caractérisée en ce que la garniture interne est constituée par un complexe métal-matière synthétique, le premier élément (4) de la garniture interne étant constitué sous forme d'une bande d'acier et le second élément (5) de la garniture interne étant constitué sous forme d'une pièce en matière synthétique moulée par injection.

Fig.4

Fig.5

Fig.1

Fig.3

Fig.2